Europäisches Patentamt

(19) European Patent Office

Office européen des brevets

(11) Numéro de publication : **0 180 681**
**B1**

(12) **FASCICULE DE BREVET EUROPÉEN**

(45) Date de publication du fascicule du brevet :
19.07.89

(51) Int. Cl.⁴ : **F 16 K 15/16**, F 04 B 39/10

(21) Numéro de dépôt : **84402565.0**

(22) Date de dépôt : **12.12.84**

(54) **Clapet à flux direct notamment pour compresseur.**

(30) Priorité : **08.11.84 FR 8417343**

(43) Date de publication de la demande :
**14.05.86 Bulletin 86/20**

(45) Mention de la délivrance du brevet :
**19.07.89 Bulletin 89/29**

(84) Etats contractants désignés :
**AT BE CH DE GB IT LI LU NL SE**

(56) Documents cités :
**DE—A— 2 946 582**
**FR—A— 1 124 282**
**FR—A— 2 323 080**
**GB—A— 1 169 294**
**GB—A— 1 371 442**
**US—A— 1 614 124**
**US—A— 2 302 447**
**US—A— 2 417 270**
**US—A— 2 985 188**
**US—A— 3 823 735**

(73) Titulaire : **S.A. dite "CREPELLE & CIE"**
**2 Place Guy de Dampierre**
**F-59000 Lille (FR)**

(72) Inventeur : **Buisine, Daniel**
**100, rue du Général de Gaulle**
**F-59211 Santes (FR)**
Inventeur : **Destoop, Thierry**
**89 F rue du Marais Les Platanes**
**F-59160 Lomme (FR)**

(74) Mandataire : **Lepage, Jean-Pierre**
**Cabinet Lemoine & Associés 12, Boulevard de la Liberté**
**F-59800 Lille (FR)**

EP 0 180 681 B1

Jouve, 18, rue St-Denis, 75001 Paris, France

## Description

La présente invention est relative à un clapet à flux direct notamment pour compresseur. Ce clapet est composé d'au moins deux coupelles présentant une zone d'admission et une zone d'échappement du fluide, lesdites coupelles étant séparées par des lamelles interposées entre ces coupelles, l'ensemble des lamelles et des coupelles étant fixé au corps du clapet.

Le clapet pourra être utilisé sur un compresseur d'air ou d'un fluide quelconque mettant en œuvre des pressions pouvant atteindre plusieurs centaines de bars. Ce clapet pourra également être utilisé en tant que clapet anti-retour sur des canalisations.

Il existe actuellement deux grandes familles de clapets, les clapets dits à flux direct à travers lesquels passe le fluide sans être dévié et les clapets dits à flux indirect, c'est-à-dire à travers lesquels le fluide passe en étant dévié.

On connaît déjà des clapets de compresseur à flux indirect comportant un disque mobile sans frottement dans une soupape. Le disque comporte à sa partie centrale un ou plusieurs bras encastrés, reliés à la zone utile, pour laquelle ils jouent le rôle de ressort de rappel. Lorsqu'un flux d'air entre en contact axialement avec ce disque, celui-ci se soulève et l'air s'échappe par plusieurs canaux en contournant le disque, ce qui a pour inconvénient de dévier le jet d'air et donc de provoquer des pertes de charges.

En ce qui concerne les petits rapports de compression (surpresseur) il arrive qu'avec ce type de clapet, la moitié de la puissance disponible au moteur soit consommée sous forme de pertes de charges par les clapets. Lorsque le jet d'air est coupé, le disque retombe sur le siège sous l'effet des ressorts de rappel.

Ce type de clapets présente, outre la perte de charge due à la déviation de l'écoulement, un certain nombre d'inconvénients liés au principe de fonctionnement et à la réalisation. Ainsi, lors de la retombée du disque sous l'effet des ressorts de rappel, il se produit le « phénomène de l'assiette », qui correspond à un rebondissement du disque dû à son inertie non négligeable. Ce rebondissement très mal contrôlé a une action néfaste sur le diagramme de compression sur lequel il fait apparaître des oscillations. Il exerce également un effet destructeur sur le clapet, sous forme d'une usure prématurée ayant pour conséquence une durée de vie maximale de l'ordre de 5 000 à 6 000 heures. Comme il y a en général plusieurs dizaines de clapets par compresseur, il faut compter sur de fréquentes interventions, donc un coût de fonctionnement élevé.

A ce coût d'entretien s'ajoute, pour ce type de clapet, un coût de production élevé dû à un usinage dans la masse et à l'emploi d'aciers spéciaux résistant à la corrosion à chaud, à l'action néfaste de certains gaz, à la compression élevée.

Enfin, du fait que le mouvement du disque se fait orthogonalement au flux d'air, et du fait des retombées brutales du disque sur le siège, le clapet fonctionne avec un niveau de bruit élevé.

On connaît également des clapets à « flux direct » axial présentant sur leur face d'entrée du fluide, ou siège, une multitude d'alvéoles qui jouent le rôle de canaux de passage du fluide, disposés parallèlement au flux. La face opposée du clapet ou face de sortie comporte des cavités biseautées dans lesquelles sont disposées des lamelles métalliques élastiques qui s'effacent au moment de l'ouverture de la soupape, pour revenir élastiquement à leur position initiale lors de la fermeture. Bien que présentant en général certains avantages par rapport au clapet classique, notamment un meilleur rendement, un niveau sonore moins élevé et une longévité accrue, ce type de clapet est néanmoins sujet à des inconvénients liés notamment au frettage des divers éléments du clapet ainsi qu'à l'étanchéité de celui-ci. En effet, les lamelles ont tendance à se déformer dans le temps et avec les variations de température.

Le clapet à flux direct connu est obligatoirement de grande dimension, diamètre de l'ordre de 170 mm ; il est difficile de réaliser des tailles plus petites.

Enfin, pour améliorer l'étanchéité lors de la fermeture, il faut employer des lamelles suffisamment rigides, ce qui est pénalisant au niveau des pertes de charges subies par le fluide pour provoquer l'ouverture des lamelles.

Le document DE-A-2.946.582 illustre, comme indiqué dans le préambule de la revendication 1, un clapet à flux direct présentant un corps de clapet, une chambre d'admission et une chambre d'échappement, au moins un ensemble de deux coupelles séparées entre elles par une lamelle constituant substantiellement les moyens obturateurs du clapet.

Par ailleurs, au niveau du canal de passage du fluide ainsi formé, le document DE-A-2.946.582 suggère l'utilisation de moyens accélérateurs de l'ouverture des moyens obturateurs en formant une tuyère reliant respectivement les zones d'admission et d'échappement.

Un des buts de la présente invention est de proposer un clapet de compresseur à flux direct sensiblement radial, supprimant les inconvénients liés aux réalisations connues dans l'état actuel de la technique.

L'un des buts essentiels du clapet selon l'invention est de fonctionner selon le mode à flux direct en diminuant au maximum les pertes de charges pour que dans une plage de pression importante et y compris aux faibles rapports de pressions, l'ouverture et la fermeture du clapet se réalisent rapidement et sans intertie ni usure.

Un autre but de l'invention est de supprimer le phénomène de l'assiette et donc de diminuer largement l'usure du clapet.

Un autre but de la présente invention est de présenter une structure modulable permettant d'augmenter la section de passage en fonction du volume de fluide à traiter.

Par ailleurs, le clapet de compresseur à flux direct conforme à la présente invention a l'avantage d'être d'une réalisation simple comportant un minimum d'usinage.

Cette réalisation simple permet également de poser facilement le clapet dans son logement et autorise ainsi une maintenance plus aisée.

Un autre but de l'invention est de proposer un clapet à flux direct réversible utilisable à l'aspiration ou au refoulement.

A cet effet, l'invention concerne un clapet de compresseur à flux direct composé d'au moins deux coupelles présentant une zone d'admission et une zone d'échappement du fluide comme indiqué dans la revendication 1.

L'invention sera bien comprise en se référant à la description suivante faite à titre d'exemple non limitatif et au dessin ci-annexé, dans lequel :

la figure 1 est une vue en coupe d'un clapet à flux direct à refoulement conforme à l'invention ;

la figure 2 est une vue de dessus de la coupelle du clapet conforme à l'invention ;

la figure 3 est une vue de dessous de la coupelle du clapet conforme à l'invention ;

la figure 4 est une vue en coupe A-A d'une partie de la coupelle du clapet représentée sur les figures 2 et 3 ;

la figure 5 est une vue en perspective d'un détail de la partie inférieure de la coupelle du clapet représentée à la figure 3 ;

la figure 6 est une vue de dessus de la lamelle du clapet conforme à l'invention.

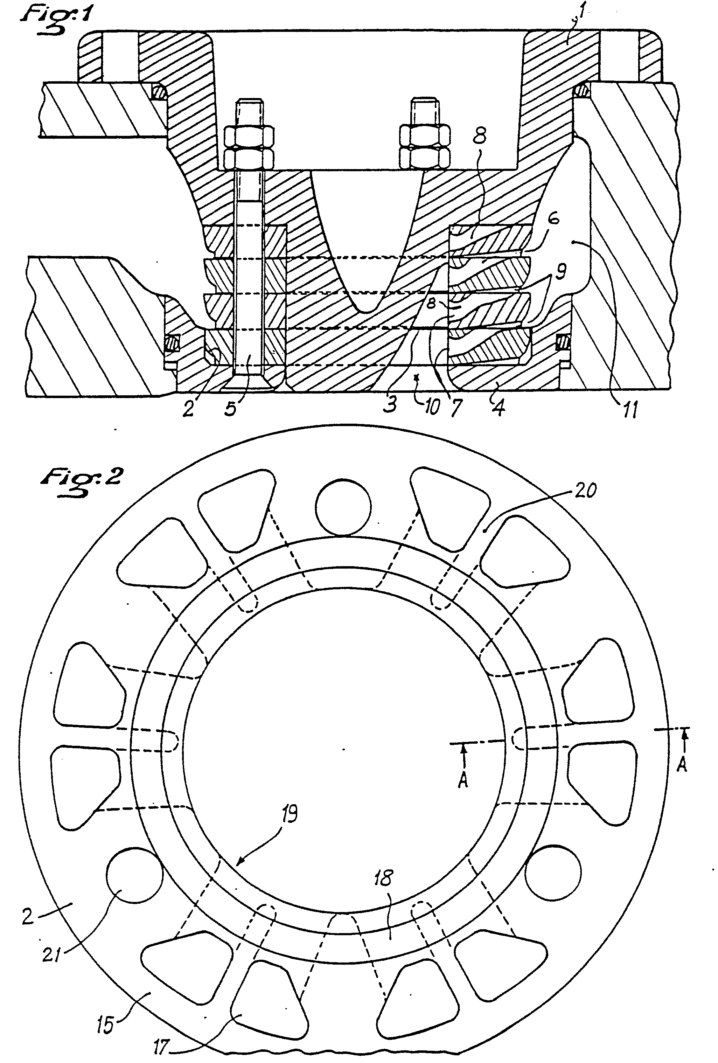

On se réfère à la figure 1. Un compresseur comporte des clapets d'aspiration avec dispositif de mise à vide et des clapets de refoulement qui font l'objet de la présente invention. La figure 1 représente un clapet de refoulement. Chaque clapet est constitué d'un corps de clapet (1) fixé sur un support (4). Sur le corps (1) est maintenu, par des écrous de fixation (5), un ensemble constitué d'une pluralité de coupelles (2) et de lamelles (3) interposées entre les coupelles (2), toutes disposées dans le même sens. A l'ouverture des lamelles (3), une chambre d'admission (10) du clapet est reliée à une chambre d'échappement (11) par l'intermédiaire de canaux (6) en forme de tuyère. Ces tuyères comportent une zone d'admission (7) contiguë avec la chambre d'admission (10), un rétrécissement central (8) et une zone d'échappement (9) contiguë avec la chambre d'échappement (11).

Il s'agit donc d'une tuyère (7-9), zone d'admission (7) convergente, section de passage pour le col i.e., ledit rétrécissement (8), zone d'échappement (9) divergente.

C'est la présence de cette tuyère réalisée immédiatement à proximité de la lamelle qui constitue un moyen accélérateur de l'ouverture du clapet. On notera que l'ouverture de la lamelle est réalisée uniquement grâce à l'énergie emmagasinée par le fluide au moment de l'accélération ce qui permet notamment de diminuer l'incidence de l'augmentation des pertes de charge.

Bien entendu, les clapets d'aspiration sont constitués de la même manière que les clapets de refoulement, les coupelles étant cependant empilées dans le sens contraire à celui vu précédemment.

Lorsqu'ils seront utilisés en clapet d'aspiration, les clapets selon l'invention présenteront la possibilité de mettre le compresseur à la mise à vide, c'est-à-dire de le faire balayer sans compression. C'est un moyen de régulation.

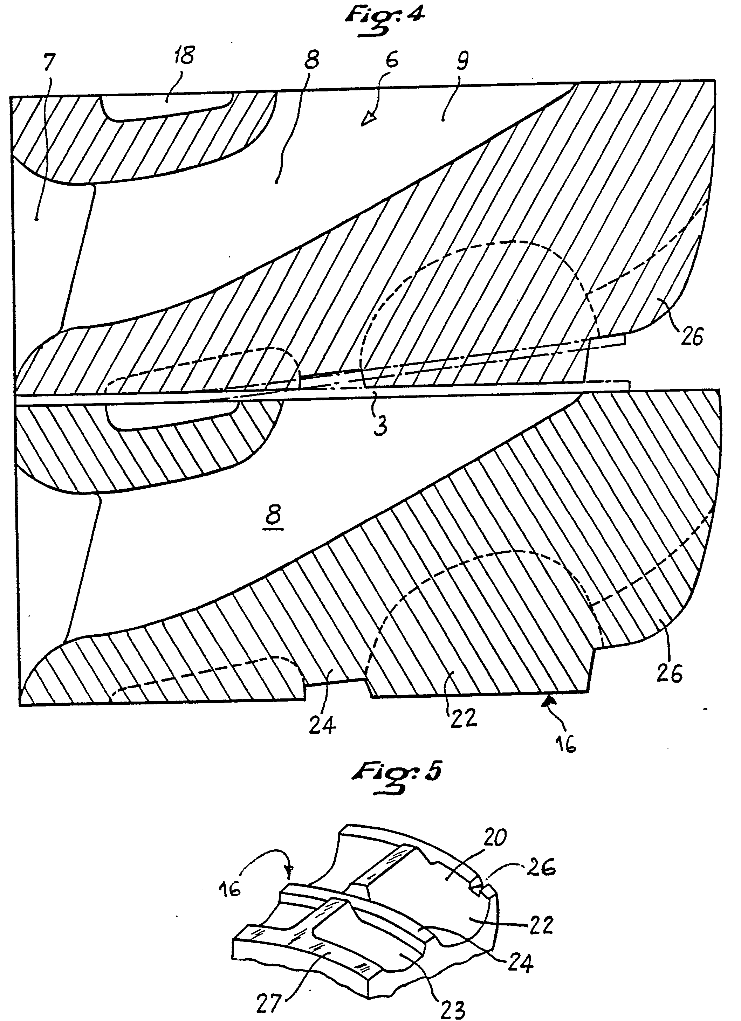

On se réfère aux figures 2, 3, 4 et 5. La coupelle (2) comporte une face supérieure (15) et une face inférieure (16) parallèles, annulaires, sur lesquelles débouche l'alésage (19) dont l'axe est confondu avec l'axe de la coupelle, et servant au centrage des coupelles par le corps de clapet (1). Sur la face supérieure (15) de chaque coupelle débouchent en outre les orifices (17) correspondant à la frontière, dans le clapet monté, entre les zones d'échappement (9) des tuyères (7-9) et la chambre d'échappement (11), comme visible sur la figure 1. Les orifices (17) des tuyères sont groupés par paires, chaque orifice d'une paire étant séparé de son voisin le plus proche par un élément de surface plane (20) formant un appui pour la lamelle en contact avec la face supérieure de la coupelle.

Sur la face supérieure (15) de chaque coupelle débouchent également les orifices de fixation (21) des coupelles sur le corps de clapet (1), lesquels orifices ont leur axe parallèle à l'axe de l'alésage (19). Sur la face inférieure (16) de chaque coupelle débouchent également les orifices de fixation (21), régulièrement répartis sur la surface annulaire de la coupelle. Ainsi, chaque lamelle, fixée en trois points à une coupelle inférieure et à une coupelle supérieure, est encastrée et n'est donc pas sujette au « phénomène de l'assiette ». Par ailleurs, chaque orifice (21) est entouré d'un élément de surface plane (36), faisant partie de la face inférieure (16) de la coupelle et formant un appui pour la lamelle en contact avec cette face inférieure (16) de la coupelle.

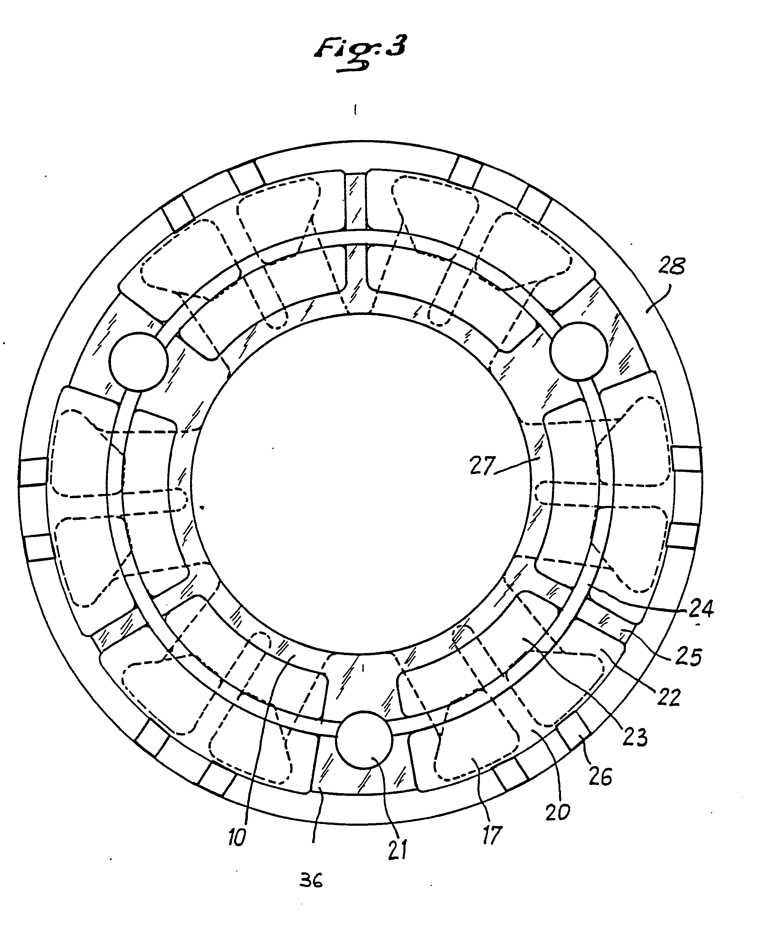

Selon les figures 3 et 5, cette face inférieure (16) présente en outre des cavités (22) et (23) communiquant entre elles par dessous un rebord annulaire (24), et limitées par les bords intérieur (27) et extérieur (28) de la face (16).

Chaque groupe de cavités (22) et (23) est subdivisée en deux parties adjacentes, de part et d'autre d'un contrefort (25) faisant saillie par rapport aux cavités (22), (23) tout en ayant sa face coplanaire avec la face inférieure (16) de la coupelle.

Par ailleurs, les cavités (23) dans la face inférieure (16) de la coupelle trouvent leur homologue dans la face supérieure sous forme d'un évidement (18) concentrique avec l'axe de la coupelle. Dans le clapet assemblé, ces évidements (18) et cavités (23) se trouvent de part et d'autre de la lamelle, pouvant ainsi jouer le rôle de pièges à impuretés. En effet, les impuretés, telles que poussières, tombent dans les cavités (23) et évidements (18), permettant ainsi à la lamelle de venir en position fermée ou ouverte sans être entravée par des poussières.

En outre, chaque cavité (22) communique avec la chambre d'échappement (11) du clapet par l'intermédiaire d'un ajutage (26) réalisé dans le bord cylindrique externe inférieur de la coupelle, comme visible à la figure 5.

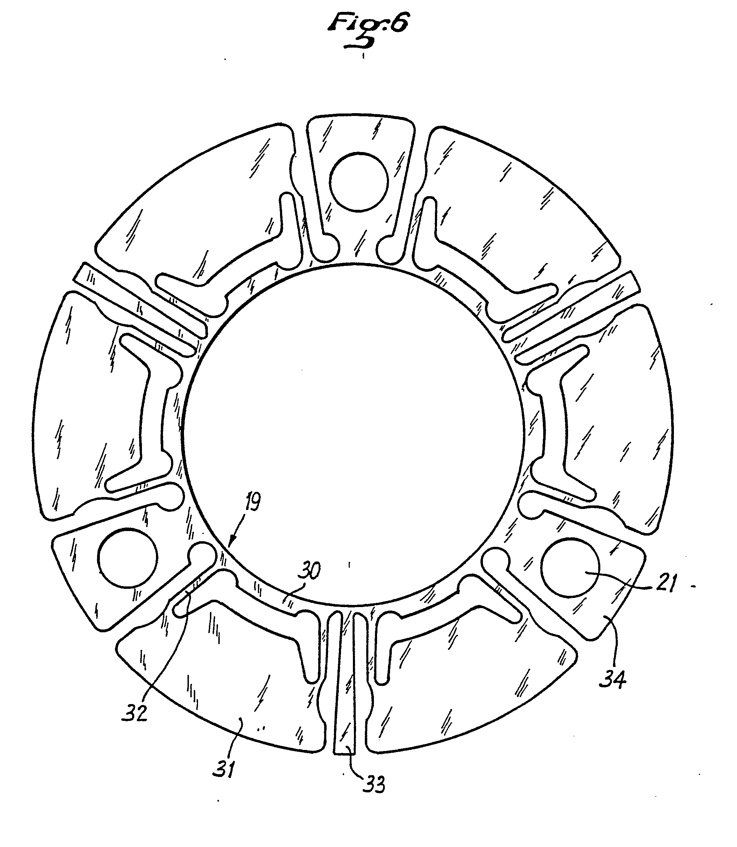

On se réfère à la figure 6. La lamelle intercalée entre deux coupelles superposées se compose d'un corps plat circulaire (30), présentant un alésage (19) et des orifices de fixation (21) de même que les coupelles, lesquels orifices servent au guidage des boulons de fixation (5). Ce corps (30) comporte des parties fixes et des parties mobiles. Les parties fixes sont constituées par le bord de l'alésage (19), les pattes de fixation (34) et les languettes de cloisonnement (33) alternant avec les pattes de fixation.

Les parties mobiles sont constituées par des pétales (31) rigides, régulièrement disposés sur le pourtour de la lamelle, et reliés au corps (30) par de petits bras flexibles et élastiques (32) également mobiles.

Ces pétales (31), rigides mais mobiles très facilement élastiques autour des bras (32), constituent les moyens obturateurs du clapet qui sont solidaires de la lamelle.

Chaque pétale est séparé de son voisin par une partie fixe de la lamelle, à savoir alternativement une languette de cloisonnement (33) ou une patte de fixation (34) jouant également le rôle de languette de cloisonnement.

Le fonctionnement du clapet conforme à l'invention et éclairé par la description ci-dessus est le suivant : au repos, chaque pétale (31) recouvre une paire d'orifices (27) de tuyères de façon à obturer le clapet. Au passage du fluide provenant de la chambre d'admission (10) à travers les tuyères (7-9), il y a accélération dudit fluide immédiatement à proximité des pétales (31), l'effet dynamique ainsi obtenu sous forme d'énergie cinétique du fluide suffit, du fait de la grande flexibilité des bras (32) pour soulever rapidement les pétales (31) de la lamelle et les plaques contre les cavités de la coupelle située directement au-dessus de la lamelle. Le mouvement de soulèvement des pétales provoque une compression de ce fait par les ajutages (26). Parallèlement à cette compression, il résulte que l'impact d'ouverture des pétales se trouve amorti par les cavités (22) jouant le rôle d'amortisseurs à air, ce qui a pour avantages de diminuer le bruit de fonctionnement du clapet ainsi que l'usure de la lamelle.

Lorsque le flux de fluide incident cesse, les pétales retombent sur la coupelle inférieure, ramenés par le rappel élastique des bras (32). Cette retombée est facilitée par la présence des ajutages (26) qui, en autorisant la réintroduction de fluide dans les cavités (22), permettent d'éviter l'effet de succion qui retarderait la retombée des pétales et la fermeture du clapet. Il en résulte un fonctionnement rapide du clapet, d'autant plus rapide que seuls les pétales et les bras de masse très faible sont en mouvement.

Par ailleurs, les pétales sont protégés de la rupture et d'une déformation excessive lors de l'impact de fermeture par les appuis intermédiaires (20) de la face supérieure (15) de la coupelle, et lors de l'impact d'ouverture par le rebord (24) situé sur la face inférieure (16) de la coupelle.

En outre, la présence des languettes de cloisonnement (32) et des pattes de fixation (34) de la lamelle permet un fonctionnement synchrone des pétales de chaque lamelle, puisque le fluide passant par deux tuyères différentes ne peut de la sorte interférer. La présence de l'évidement (18) de la face supérieure de la coupelle et des cavités (23) de la face intérieure permet de disposer de pièges collectant les éventuelles poussières qui pourraient entraver le bon fonctionnement des bras et des pétales.

L'Homme de l'Art déterminera les matériaux à employer et les dimensions à donner à chaque élément du clapet conforme à la présente invention, afin d'obtenir les meilleurs résultats en termes de rapidité et de silence de fonctionnement, de pertes de charges et de longévité du clapet.

## Revendications

1. Clapet à flux direct, notamment pour compresseur, ledit clapet présentant :
   un corps de clapet (1),
   une chambre d'admission (10) et une chambre d'échappement (11),
   au moins deux coupelles (2), séparées par des lamelles (3) interposées entre lesdites coupelles (2), l'ensemble des coupelles (2) et des lamelles (3) étant fixé au corps du clapet et définissant un moyen de passage du fluide entre la chambre d'admission (10) et la chambre d'échappement (11), ledit moyen de passage du fluide comprenant des canaux aménagés dans chaque coupelle (2),
   des moyens obturateurs (31) du clapet, disposés en amont des canaux pour les obturer et solidaires avec chaque lamelle (3),
   lesdits canaux contenant des moyens accélérateurs (8) de l'ouverture desdits moyens obturateurs (31) du clapet, substantiellement formés par des tuyères reliant respectivement une zone d'admission (7) contiguë avec ladite chambre d'admission (10) et une zone d'échappement (9) séparée de ladite chambre d'échappement (11) par lesdits moyens obturateurs (31),
   caractérisé par le fait qu'il comporte des moyens accélérateurs de la fermeture desdits moyens obturateurs (31) du clapet au moment de la fermeture dudit clapet.

2. Clapet à flux direct, selon la revendication 1, caractérisé par le fait qu'il comporte des moyens amortisseurs à air de l'impact d'ouverture desdits moyens obturateurs (31), opérant au moyen de l'ouverture dudit clapet.

3. Clapet à flux direct, selon la revendication 1, caractérisé par le fait que lesdits moyens accélérateurs de la fermeture desdits moyens obturateurs (31) sont des cavités (22) aménagées dans chaque coupelle (2) coopérant avec des ajutages (26) débouchant en dehors du clapet, lesdites cavités (22) et ajutages (26) étant disposés dans la coupelle (2) en amont desdits moyens obturateurs.

4. Clapet à flux direct, selon la revendication 2, caractérisé par le fait que lesdits moyens amortisseurs à air sont des cavités (22) aménagées dans chaque coupelle (2), coopérant avec des ajutages (26) débouchant en dehors du clapet, lesdites cavités (22) et ajutages (26) étant disposés dans la coupelle (2) en amont desdits moyens obturateurs.

5. Clapet à flux direct, selon la revendication 3 et 4, caractérisé par le fait que lesdits moyens accélérateurs de la fermeture desdits moyens obturateurs (31) et lesdits moyens amortisseurs à air sont constitués par les mêmes cavités (22) et ajutages (26).

6. Clapet de compresseur, selon la revendication 1, caractérisé par le fait qu'une même coupelle (2) accélère l'ouverture de la lamelle (3) du dessus et accélère la fermeture de la lamelle (3) du dessous.

7. Clapet du compresseur, selon ·la revendication 1, caractérisé par le fait que chaque coupelle présente sur ses faces supérieure et inférieure en contact avec des lamelles des pièges à impuretés telles que poussières.

8. Clapet de compresseur, selon la revendication 7, caractérisé par le fait que lesdits pièges à ·impuretés sont des évidements (18) concentriques à l'alésage du clapet situés sur la face supérieure (15) de la coupelle et des cavités situées (23) sur la face inférieure (16) de la coupelle.

9. Clapet de compresseur, selon la revendication 1, caractérisé par le fait que les moyens obturateurs sont des pétales (31) rigides reliés au corps de la lamelle par des bras flexibles et élastiques (32).

10. Clapet de compresseur, selon la revendication 9, caractérisé par le fait que les pétales (31) sont séparés deux à deux par des moyens de cloisonnement (33, 34) solidaires du corps de la lamelle.

11. Clapet de compresseur, selon la revendication 10, caractérisé par le fait que lesdits moyens de cloisonnement sont alternativement des languettes (33) et des pattes de fixation (34) de la lamelle.

12. Clapet de compresseur, selon la revendication 1, caractérisé par le fait que les moyens obturateurs sont protégés à l'encontre d'une déformation excessive par la présence d'appuis intermédiaires disposés sur la coupelle.

## Claims

1. A straight flow valve, especially for compressor, said valve comprising :
   a valve body (1),
   an intake chamber (10) and an exhaust chamber (11),
   at least two cupels (2) separated by lamellae (3) interposed between said cupels (2), the whole of the cupels (2) and lamellae (3) being fastened to the valve body and defining a means of passage of the fluid between the intake chamber (10) and the exhaust chamber (11), said fluid passage means comprising canals formed in each cupel (2),
   shutting means (31) of the valve, disposed above the canals for closing them and integral with each lamella (3),
   said canals containing accelerating means (8) of the opening of said shutting means (31) of the valve, substantially composed of twyers respectively connecting an intake zone (7) contiguous to said intake chamber (10) and an exhaust zone (9) separated from said exhaust chamber (11) by said shutting means (31),
   characterized by the fact that it comprises accelerating means of the closing of said shutting means (31) of the valve at the time of the closing of said valve.

2. A straight flow valve according to claim 1, characterized by the fact it comprises air damping means of the impact of opening of said shutting means (31), operating by means of the opening of said valve.

3. A straight flow valve according to claim 1, characterized by the fact that said accelerating means of the closing of said shutting means (31) are cavities (22) formed in each cupel (2) cooperating with nozzles (26) being disposed in the cupel (2) above said shutting means.

4. A straight flow valve according to claim 2, characterized by the fact that said air damping means are cavities (22) formed in each cupel (2), cooperating with nozzles (26) emerging outside the valve, said cavities (22) and nozzles (26) being disposed in the cupel (2) above said shutting means.

5. A straight flow valve according to claims 3 and 4, characterized by the fact that said accelerating means of the closing of said shutting means (31) and said air damping means are composed of the same cavities (22) and nozzles (26).

6. A compressor valve according to claim 1, characterized by the fact that a same cupel (2) accelerates the opening of the lamella (3) of the top and accelerates the closing of the lamella (3) of the bottom.

7. A compressor valve according to claim 1, characterized by the fact that each cupel comprises, upon its lower and upper faces in contact with lamellae, traps for impurities such as dust.

8. A compressor valve according to claim 7, characterized by the fact that said impurity traps are recesses (18) concentric to the valve boring, located upon the upper face (15) of the cupel, and cavities situated (23) upon the lower face (16) of the cupel.

9. A compressor valve according to claim 1, characterized by the fact the shutting means are rigid petals (31) connected with the body of the lamella by resilient and flexible arms (32).

10. A compressor valve according to claim 9, characterized by the fact that the petals (31) are separated in pairs by partitioning means (33, 34) integral with the body of the lamella.

11. A compressor valve according to claim 10, characterized by the fact that said partitioning means alternatively are tongues (33) and fastening flats (34) of the lamella.

12. A compressor valve according to claim 1, characterized by the fact that the shutting means are protected against and extreme deformation thanks to the presence of the intermediairy supports disposed upon the cupel.

## Patentansprüche

1. Geradstromventil, insbesondere für Kompressoren, aus :

einem Ventilkörper (1) ;

einer Einlaßkammer (10), und einer Auslaßkrammer (11) ;

mindestens zwei Schalen (2), die durch dazwischen angeordnete Lamellen (3) getrennt sind, wobei die Einheit aus den Schalen (2) und den Lamellen (3) an dem Ventilkörper befestigt ist und ein Mittel zum Strömen des Fluids zwischen der Einlaßkammer (10) und der Auslaßkammer (11) definiert, und dieses Mittel zum Strömen des Fluids zwei Kanäle aufweist, die in jeder Schale (2) angebracht sind ;

Verschlußmitteln (31) für das Ventil, die stromaufwärts von den Kanälen angeordnet sind, um diese Kanäle zu verschließen, und die mit jeder Lamelle (3) fest verbunden sind ;

wobei die besagten Kanäle Beschleunigungsmittel (8) für die Öffnung der besagten Verschlußmittel (31) des Ventils enthalten, aus im wesentlichen Düsen, die eine an die besagte Einlaßkammer (10) angrenzende Einlaßzone (7) mit einer Auslaßzone (9) verbinden, die von der besagten Auslaßkammer (11) durch die besagten Verschlußmittel (31) getrennt ist, dadurch gekennzeichnet, daß es Beschleunigungsmittel für die Schließung der besagten Verschlußmittel (31) des Ventils in dem Augenblick der Schließung des besagten Ventils aufweist.

2. Geradstromventil gemäß Anspruch 1, dadurch gekennzeichnet, daß es Mittel zur Luftdämpfung des Öffnungsstoßes der besagten Verschlußmittel (31) aufweist, die infolge der Öffnung des besagten Ventils wirksam werden.

3. Geradstromventil gemäß Anspruch 1, dadurch gekennzeichnet, daß die besagten Beschleunigungsmittel für die Schließung der besagten Verschlußmittel (31) in jeder Schale (2) angebrachte Hohlräume (22) sind, die mit nach außerhalb des Ventils führenden Schlitzen (26) zusammenwirken, wobei die besagten Hohlräume (22) und Schlitze (26) in der Schale (2) stromaufwärts von den besagten Verschlußmitteln angeordnet sind.

4. Geradstromventil gemäß Anspruch 2, dadurch gekennzeichnet, daß die besagten Luftdämpfungsmittel in jeder Schale (2) angebrachte Hohlräume (22) sind, die mit nach außerhalb des Ventils führenden Schlitzen (26) zusammenwirken, wobei die besagten Hohlräume (22) und Schlitze (26) in der Schale (2) stromaufwärts von den besagten Verschlußmitteln angeordnet sind.

5. Geradstromventil gemäß Anspruch 3 und 4, dadurch gekennzeichnet, daß die besagten Beschleunigungsmittel für die Schließung der besagten Verschlußmittel (31), und die besagten Luftdämpfungsmittel aus denselben Hohlräumen (22) und Schlitzen (26) bestehen.

6. Kompressorventil gemäß Anspruch 1, dadurch gekennzeichnet, daß ein und dieselbe Schale (2) die Öffnung der darüber angeordneten Lamelle (3) und die Schließung der darunter angeordneten Lamelle (3) beschleunigt.

7. Kompressorventil gemäß Anspruch 1, dadurch gekennzeichnet, daß jede Schale auf der an eine Lamelle angrenzenden oberen und unteren Seite Fallen für Verunreinigungen, wie beispielsweise Staub aufweist.

8. Kompressorventil gemäß Anspruch 7, dadurch gekennzeichnet, daß die besagten Fallen für Verunreinigungen zu der Bohrung des Ventils konzentrische Ausparungen (18) auf der oberen Seite (15) der Schale, und Hohlräume (23) auf der unteren Seite (16) der Schale sind.

9. Kompressorventil gemäß Anspruch 1, dadurch gekennzeichnet, daß die Verschlußmittel starre Keulen (31) sind, die über flexible, elastische Arme (32) mit dem Körper der Lamelle verbunden sind.

10. Kompressorventil gemäß Anspruch 9, dadurch gekennzeichnet, daß die Keulen (31) jeweils paarweise durch mit dem Körper der Lamelle fest verbundene Unterleilungsmittel (33, 34) voneinander getrennt sind.

11. Kompressorventil gemäß Anspruch 10, dadurch gekennzeichnet, daß die besagten Unterteilungsmittel abwechselnd Zungen (33) und Lamellen-Befestigungslaschen (34) sind.

12. Kompressorventil gemäß Anspruch 1, dadurch gekennzeichnet, daß die Verschlußmittel durch auf der Schale angeordnete Zwischenstützen vor einer übermäßigen Verformung geschützt sind.

*Fig:1*

*Fig:2*

Fig.3

28

27

24

25

22

23

26

20

17

10

21

36

*Fig. 4*

*Fig. 5*

3

Fig:6